# EUROPEAN PATENT APPLICATION

(11) **EP 4 741 908 A1**
(43) Date of publication of application: **13.05.2026**
(21) Application number: 23947691.4
(22) Date of filing: 02.08.2023
(51) Int. Cl.: G02B 27/01, G02B 6/00, G06T 19/00

(54) **ELECTRONIC DEVICE**

(71) Applicant: LG Electronics Inc., Yeongdeungpo-gu Seoul 07336 (KR)
(72) Inventor: JU, Yeongyeong, Seoul 06772 (KR); SHIN, Sungchul, Seoul 06772 (KR); JEONG, Moongi, Seoul 06772 (KR)
(74) Representative: Schornack, Oliver
(86) International application number: PCT/KR2023/011282
(87) International publication number: WO 2025/028686

(57) **Abstract**

The present disclosure relates to an electronic device, such as a wearable display, which is provided with a pinhole array configured to further improve the quality of an image visible to a user. The present disclosure may provide an electronic device comprising: a transparent substrate; a light source module array which is provided at a first surface of the transparent substrate and has a plurality of light source modules arranged in a lattice structure; a pinhole array which is provided at a second surface of the transparent substrate and has a plurality of micro-cluster pinholes arranged to correspond to the plurality of light source modules respectively; and an optical driving unit which controls the light source module array, wherein light beams according to an image generated by the optical driving unit are emitted from the light source module array and provided to a user through the pinhole array.

## Description

### [Technical Field]

The present disclosure relates to an electronic device, and more particularly, to an electronic device such as a wearable display used in Virtual Reality (VR), Augmented Reality (AR), Mixed Reality (MR), and the like.

### [Background]

Virtual reality (VR) refers to a specific environment, situation, or technology itself that is similar to reality created by artificial technology using computers or the like, but is not real.

Augmented Reality (AR) refers to a technology that synthesizes virtual objects or information in a real environment and makes them look like objects existing in an original environment.

Mixed reality (MR) or hybrid reality refers to creating a new environment or new information by combining a virtual world and a real world. In particular, it is called mixed reality when it refers to something that can interact in real time between real and virtual things.

In this case, the created virtual environment, situation, or the like stimulates user's five senses and allows them to freely enter and exit the boundary between reality and imagination by allowing them to experience space and time similar to the real thing. In addition, users may not only simply immerse themselves in this environment, but also interact with things implemented in this environment, such as manipulating or issuing commands using a real device.

Recently, research on equipment (gear) used in such technical fields is being actively conducted.

Wearable displays producing an image in the air are generally divided into two types. That is, there are a helmet-type wearable display worn on a user's head and a glasses-type wearable display. A helmet-type wearable display has a structure in which an optical lens system has an increased volume so as to produce a large image through an expanded field of view (FOV) and is mounted on a user's head, and is thus referred to as a head mounted display (HMD). Therefore, the helmet-type wearable display is used in professional fields requiring a restricted space with little motion, such as military training (cyber flight training) and cyber games.

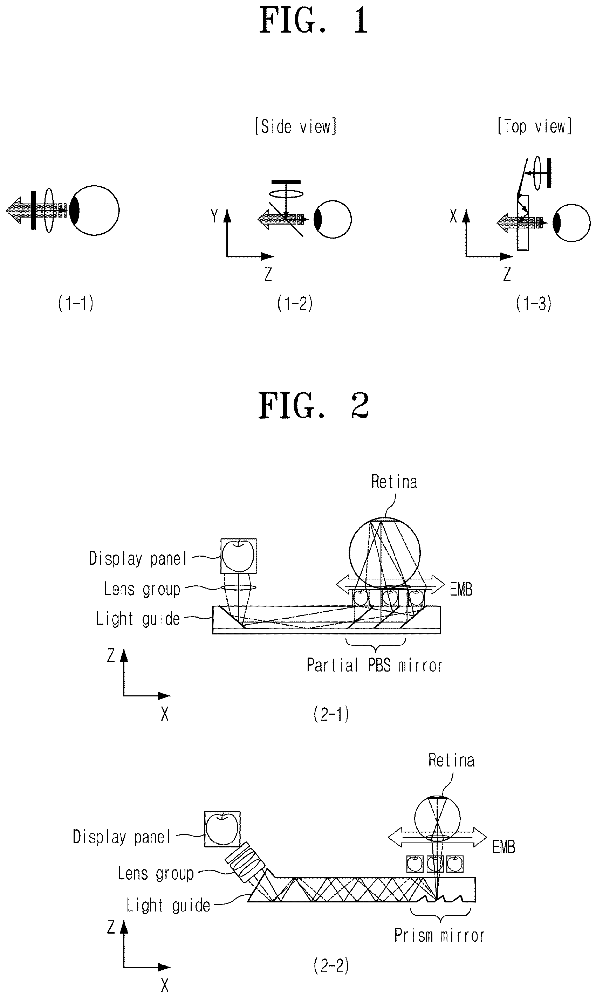

On the other hand, a glasses-type wearable display, as exemplarily shown in FIG. 1, has a lightweight and small-sized structure that is mounted on user's nose and ears like the structure of glasses and is easily used while in motion. Glasses-type wearable displays are divided into three structures.

First, a direct view structure (FIG. 1 (1-1)), in which panel and a lens are fixed in front of the eyes, is most classic and basic in design of a virtual image optical system and is formed in a see-closed type in which a user may see an external view. Therefore, the direct view structure (FIG. 1 (1-1)) needs to recognize an external view in a moving space and is thus disadvantageous.

Second, in order to solve the disadvantage of the direct view structure (FIG. 1 (1-1)), a top-fixed reflection structure (FIG. 1 (1-2)), in which a panel is fixed at the top and a user may see an external view using a partially reflective surface, is provided. However, since the panel and an optical system group are generally fixed in front of the eyes, the top-fixed reflection structure (FIG. 1 (1-2)) is difficult to have a thin thickness as in a general glasses structure and a light weight.

Third, a side-fixed light guide structure (FIG. 1 (1-3)), in which a panel and an optical lens group are moved from the front to side frames at the side of eyes and is similar to a glasses lens using a light guide, is provided.

Side-fixed light guide structures (FIG. 1 (1-3)) are divided into a PBS type (FIG. 2 (2-1)) and a prism type (FIG. 2 (2-2)) so as to transmit beams to a pupil through internal reflection of a planar light guide, as exemplarily shown in FIG. 2. Since special partial coating of several tens of layers is performed on respective PBS plane segments and then the segments are bonded so as to uniformly emit beams from respective mirrors and the top-fixed reflection structure (FIG. 2 (2-1)) is formed of a restricted material, such as glass, the top-fixed reflection structure (FIG. 2 (2-2)) is difficult to mass produce using a mold structure. On the other hand, the prism type structure 220 may be manufactured using a mold structure and be easily formed of plastic. However, a lens group is disposed distant from the eyes through total internal reflection and thus the two planar light guide types are limited in extension of an FOV and a PBS or prism pattern is virtually visible.

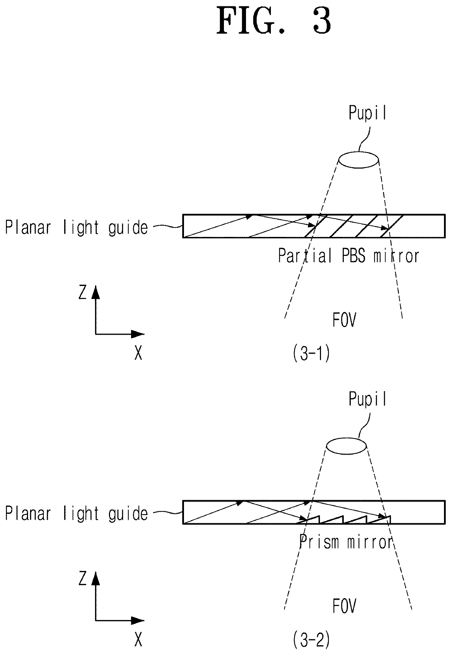

Further, beams are reflected within the effective range of partial PBS mirrors or a prism mirror changing a path to guide the beams to pupils through total internal reflection of a planar light guide and, thus, the conventional methods are limited in the FOV determining the size of an image. As exemplarily shown in FIG. 3, in order to form a range in which beams do not overlap to perform internal reflection, an effective segment partial PBS mirror range (FIG. 3 (3-1)) or a prism mirror range (FIG. 3 (3-2) is restricted in connection with the thickness of the planar light guide. Particularly, since intervals between eyes differ from one person to another and pupils move, an eye motion box (EMB) range to maintain performance of a desired image is considered even in such a change and, thus, there is a severe restriction on increase in the FOV through internal reflection. Moreover, a visual pattern is visible and, thus, the segment partial PBS mirror structure or the prism mirror structure needs to be considered in design.

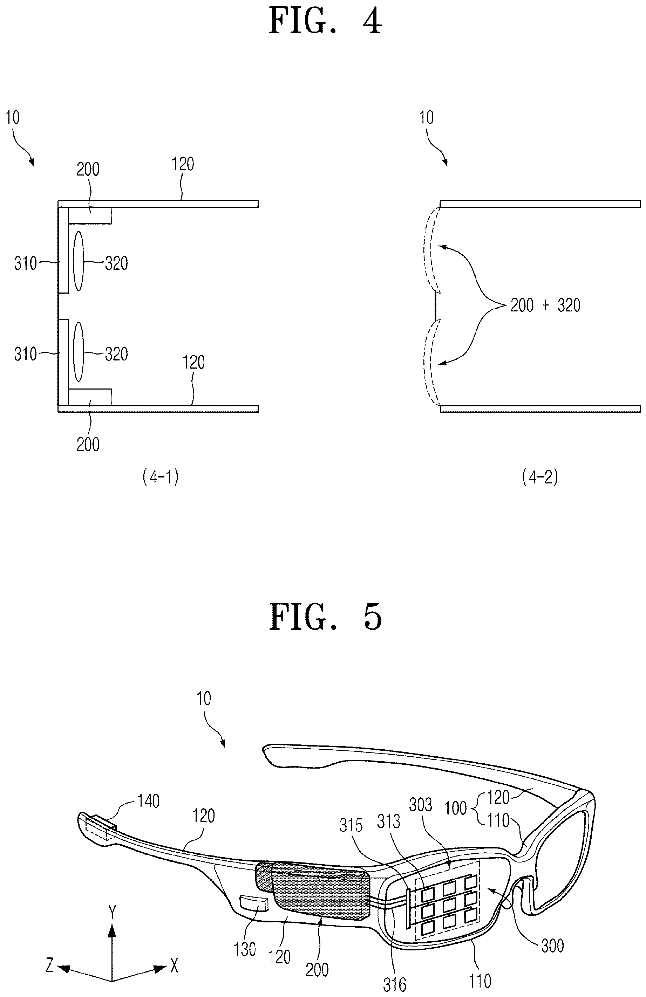

Hereinafter, a glasses-type electronic device will be described with reference to FIG. 4. FIG. 4 illustrates a glasses-type electronic device.

As shown in (4-1) in FIG. 4, a glasses-type electronic device 10 may include an optical driver 200. The optical driver 200 may be disposed on at least one of a pair of side frames 120. The optical driver 200 may be composed of an image source panel and a lens. The image source panel may be, for example, the display panel described above, and may generate an image that may be viewed by the user through the electronic device 10. The lens may enlarge the image such that the image generated by the image source panel is visible to the user. The enlarged image may be transmitted to user's eyes through a light guide 310 as described above. In one example, the electronic device 10 may also include a vision-correcting lens 320.

Although the electronic device 10 as described above has the glasses structure, it may be burdensome for the user to wear the electronic device 10 for a long time in terms of size and weight.

In order to solve such a problem, as shown in (4-2) in FIG. 4, a glasses-type electronic device 10 in which the vision-correcting lens 320 and/or a transparent substrate corresponding thereto is integrally formed with at least a portion of the optical driver 200 has recently been introduced.

In particular, in order to further reduce the size and/or the weight of the electronic device 10, a pinhole array may be used instead of the lens in the optical driver 200.

Even when the pinhole array is disposed instead of the lens for the optical driver 200 of the electronic device 10, research on a method for improving a quality of the image visible to the user needs to be continued.

### [Summary]

### [Technical Problem]

To solve the above-described problems and various problems related thereto, a technical purpose of the present disclosure is to provide an electronic device such as a wearable display having a pinhole array configured to further improve a quality of an image visible to a user.

### [Technical Solutions]

To achieve the technical purpose as described above, according to an aspect of the present disclosure, provided is an electronic device comprising: a transparent substrate; a light source module array disposed on a first surface of the transparent substrate and having a plurality of light source modules arranged in a lattice structure; a pinhole array disposed on a second surface of the transparent substrate and having a plurality of micro cluster pinholes defined therein and arranged to correspond to the plurality of light source modules, respectively; and an optical driver that controls the light source module array, wherein light beams based on an image generated by the optical driver are irradiated from the light source module array and provided to a user through the pinhole array.

Each micro cluster pinhole may comprise a plurality of micro pinholes.

Each micro pinhole may have a hexagonal opening, and the plurality of micro pinholes may be arranged such that a separation distance between micro pinholes adjacent to each other is uniform.

A ratio between an aperture of each micro pinhole to the separation distance between the micro pinholes adjacent to each other may be in a range of 1:1 to 1:20.

The aperture of the micro pinhole may be in a range of 5µm to 100µm, and the separation distance between the micro pinholes adjacent to each other may be in a range of 5µm to 2000µm.

A separation distance between micro cluster pinholes adjacent to each other may be in a range of 1:1.8 to 1:2.2.

An aperture of each micro cluster pinhole may be in a range of 100µm to 1500µm, and the separation distance between the micro cluster pinholes adjacent to each other may be in a range of 200µm to 3000µm.

The separation distance between the micro pinholes adjacent to each other may increase from a center of each micro cluster pinhole toward a periphery thereof.

Each micro cluster pinhole may be defined in a manner such that at least two layers are stacked.

A plurality of micro pinholes may be defined in each layer; and the at least two layers stacked such that the micro pinholes in the respective layers may at least partially overlap each other or may be at least partially covered by each other.

At least one of a shape, a size, and a separation spacing of the micro pinholes in one layer may be different from at least one of a shape, a size, and a separation spacing of the micro pinholes in another layer.

Each light source module may be composed of a cluster of light source elements.

Each light source element may comprise a liquid crystal on silicon (LCoS) element, a liquid crystal display (LCD) element, an organic light emitting diode (OLED) element, a digital micromirror device (DMD) element, a micro light emitting diode (LED) element, and a quantum dot (QD) LED element.

The electronic device may be a wearable display, and the transparent substrate may be disposed such that the first surface thereof faces an outside and the second surface thereof faces a user when the wearable display is worn.

The wearable display may comprise a front frame and a side frame, the transparent substrate may be disposed on the front frame, and the optical driver may be disposed on the side frame.

The transparent substrate may be flat or may have a predetermined curvature.

The electronic device may further comprise an image division circuit that divides the image generated by the optical driver and transmits the divided images to the respective light source modules.

A scale of the lattice structure may be determined based on at least one of a distance between the light source module array and a user's pupil, a pupil size, an optical wavelength band.

### [Advantageous Effects]

Effects of the electronic device according to the present disclosure will be described as follows.

According to at least one of various aspects of the present disclosure, the quality of the image visible to the user may be further improved and the image with the wide field of view (FOV) may be provided.

### [Brief Description of the Drawings]

FIG. 1 is a view illustrating examples of glasses-type wearable displays.
FIG. 2 is a view illustrating examples of planar light guide-type wearable displays.
FIG. 3 is a view illustrating Field Of Views (FOVs) of planar light guide-type wearable displays.
FIG. 4 illustrates a glasses-type electronic device.
FIG. 5 is a perspective view of an electronic device according to an embodiment of the present disclosure.
FIG. 6 is a cross-sectional view of a display of an electronic device according to an embodiment of the present disclosure.
FIG. 7 illustrates a first surface of a transparent substrate of a display of an electronic device according to an embodiment of the present disclosure.
FIG. 8 illustrates divided images output from a light source module array and a full image as they are viewed by a user through a pinhole array according to an embodiment of the present disclosure.
FIGS. 9 and 10 illustrate pinhole arrays of an electronic device according to an embodiment of the present disclosure.

### [Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

Hereinafter, referring to FIG. 5, a glasses-type electronic device including a pinhole array will be described. FIG. 5 is a perspective view of an electronic device according to an embodiment of the present disclosure.

As shown in FIG. 5, an electronic device 10 may include a frame 100, an optical driver 200, and a display 300.

The electronic device 10 may be of the glasses type (smart glasses). The glasses-type electronic device 10 is configured to be wearable on a head of a human, and may include the frame (casing, housing, and the like) 100 therefor. The frame 100 may be made of a flexible material so as to be easily worn.

The frame 100 is supported on the head and provides a space in which various components are mounted. As shown in FIG. 5, electronic components such as the optical driver 200, a user input unit 130, or a sound output unit 140 may be mounted on the frame 100. In addition, a lens covering at least one of a left eye and a right eye may be detachably mounted on the frame 100.

As shown in FIG. 5, the frame 100 may have a shape of glasses worn on a face of the user, but may not be necessarily limited thereto, and may have a shape of goggles or the like worn in close contact with the user's face.

The frame 100 as described above may include a front frame 110 having at least one opening defined therein and a pair of side frames 120 extending in a first direction (y) intersecting a direction of the front frame 110 and parallel to each other.

The optical driver 200 may control the various electronic components disposed in the electronic device 10. The optical driver 200 may not include an image source panel. The image source panel may be disposed in the display 300. This will be described again later.

The optical driver 200 may be fixed to one of the two side frames 120. For example, the optical driver 200 may be fixed to an inner side or an outer side of one side frame 120, or may be embedded in one side frame 120 and integrally formed therewith. Alternatively, the optical driver 200 may be fixed to the front frame 110 or may be equipped separately from the electronic device 10.

The display 300 may be implemented in a form of a head mounted display (HMD). The HMD form refers to a display scheme in which the display is mounted on the head and provides an image directly in front of the user's eyes. In order to provide the image directly in front of the user's eyes when the user wears the electronic device 10, the display 300 may be disposed to correspond to at least one of the left eye and the right eye. FIG. 5 illustrates that the display 300 is located at a portion corresponding to the right eye so as to output the image toward the user's right eye.

The display 300 may allow the user to visually recognize an external scene, and at the same time, to view the image generated under the control of the optical driver 200.

The electronic device 10 may include a display area 303 on the display 300, instead of the image source panel. That is, the display area 303 may serve as the image source panel. The display area 303 may be equipped as a light source module array. Each light source module 313 in the light source module array 303 may include a light source element implementing a single pixel, or may include a light source element implementing a cluster of hundreds to thousands of pixels. The light source element may be understood as a micro light source element.

The light source element may include a liquid crystal on silicon (LCoS) element, a liquid crystal display (LCD) element, an organic light emitting diode (OLED) element, and a digital micromirror device (DMD), and may also include a next-generation display element such as a micro light emitting diode (LED) and a quantum dot (QD) LED.

Image data generated by the optical driver 200 may be transmitted to the light source module array 303 as an image signal along a conductive input line 316, and the light source module array 303 may convert the image signal into light (or a light beam) and irradiate the light to the user's eye.

The plurality of light source modules 313 constituting the light source module array 303 may be arranged in a lattice structure (or a diamond structure, a zigzag structure, or the like). A scale of the lattice structure may vary depending on at least one of a distance between the light source module array 303 and user's pupil, a pupil size, an optical wavelength band, and the like. Because the plurality of light source modules 313 are implemented in a fine size in the lattice structure, a wide field of view (FOV) may be provided without deteriorating aesthetics of the electronic device 10.

The image signal generated by the optical driver 200 is transmitted to an image division circuit 315 disposed on one side of the display area 303 through the conductive input line 316, and is divided into a plurality of branches in the image division circuit 315 and transmitted to the light source modules 313 that are arranged for the respective branches. The image division circuit 315 may be located outside the user's field of view to minimize gaze interference. Each of the divided images divided by the image division circuit 315 may be output by an individual light source module 313, and the divided images may implement one image (hereinafter, referred to as an full image) as a whole.

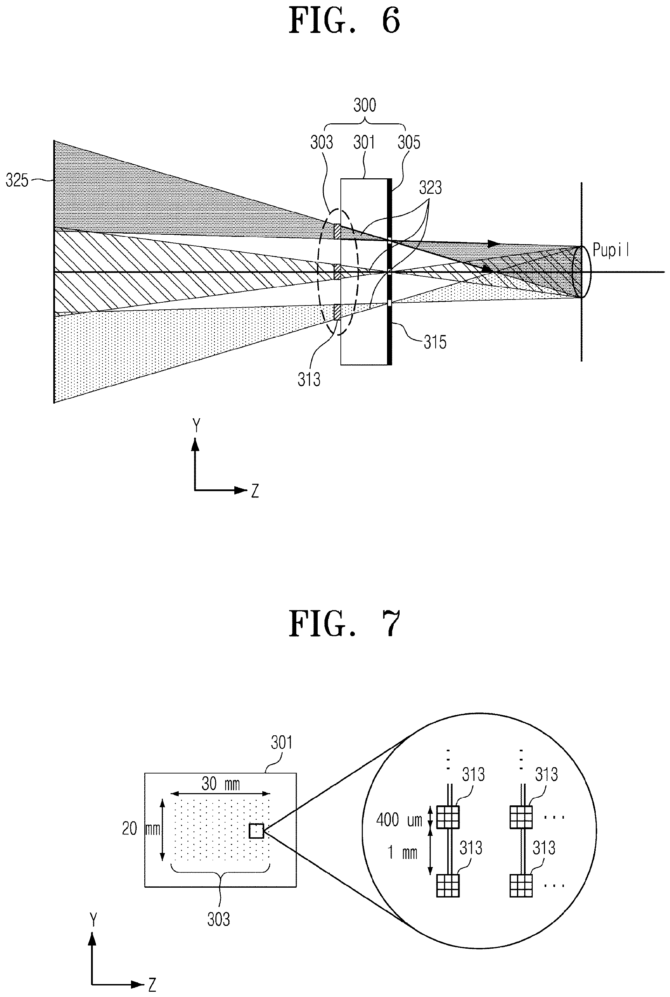

Hereinafter, the display 300 will be described in more detail with reference to FIG. 6. FIG. 6 is a cross-sectional view of a display of an electronic device according to an embodiment of the present disclosure.

The light source module array 303 may be disposed on a first surface of a transparent substrate 301 of the display 300. The first surface may be a surface far from the user. The light source module array 303 may be composed of the plurality of light source modules 313 arranged in the lattice structure. The transparent substrate 301 may be equipped as a planar surface or a surface having a predetermined curvature. The transparent substrate 301 may include at least one of a glass substrate, a plastic substrate, and a metal substrate.

In the light source module array 303, the plurality of light source modules 313 may be arranged at a uniform spacing. Alternatively, a spacing between each pair of the plurality of light source modules 313 may gradually increase in an outward direction from a center of the light source module array 303.

The light source module 313 may output divided images 323 so as to have directivity in a user direction (that is, a user's eye direction).

The light source element of the light source module 313 may be constructed to have a size of hundreds of um or smaller, and may be configured to have a special wavelength band as well as a visible light range, depending on use.

The light source module array 303 may be configured to irradiate light beams having a predetermined orientation angle in a uniform pattern shape.

In one example, a pinhole array 305 may be disposed on a second surface of the transparent substrate 301 of the display 300. The pinhole array 305 may be understood as a kind of optical array. The second surface, as a surface opposite to the first surface, may be a surface close to the user. The pinhole array 305 may be understood as an array in which a plurality of pinholes 315 for light transmission are defined in a predetermined pattern in a light blocking layer. The pinhole 315 may be understood as a kind of optical element.

Each of the plurality of light source modules 313 may be in a one-to-one correspondence with each of the plurality of pinholes 315. That is, each pinhole 315 may be aligned with each light source module 313 in a radial direction from the user's pupil toward the display 300. Accordingly, the divided images 323 from the respective light source modules 313 may be output to the user's pupil through the respective pinholes 315 as one full image 325. The user may view the image based on a pinhole effect. The term "pinhole" originates from an opening for viewing an object resembling a hole made with a pin, and the pinhole effect refers to a phenomenon in which light that has passed through a small hole is more clearly visible because of a greater depth of field (DOF).

A plane of each pinhole may have a circular shape or have a polygonal shape such as a square or a pentagon. A light source for the pinhole array 305 may have a wavelength band of the visible light range, and may range from a laser light source having a narrow wavelength bandwidth to a natural light source having a wide wavelength bandwidth. A medium through which light passes in the pinhole may be a transmissive material such as glass or plastic, in addition to air (transmittance n=1).

Accordingly, the display 300 may allow the user to visually recognize the external scene, and at the same time, to view the image generated under the control of the optical driver 200.

The plurality of light source modules 313 may serve as the image source panel in the optical driver 200 of the electronic device 10 in FIG. 4, and the plurality of pinholes 315 may serve as the lens in the optical driver 200 of the electronic device 10 in FIG. 4.

Hereinafter, the light source module array 303 will be described in more detail with reference to FIG. 7. FIG. 7 illustrates a first surface of a transparent substrate of a display of an electronic device according to an embodiment of the present disclosure.

As shown in FIG. 7, the light source module array 303 may be disposed in a predetermined area on the first surface of the transparent substrate 301 of the display 300 in a predetermined size. It is illustrated in FIG. 7 that the predetermined area is a rectangular region at a center of the first surface of the transparent substrate 301, and the predetermined size is 30mm in width and 20mm in height, but these are merely an example, and the present disclosure is not limited thereto.

In the light source module array 303, the plurality of light source modules 313 may be arranged to be spaced apart from each other in a pattern such as a grid or a diamond at a predetermined spacing. The plurality of pinholes 315 may be arranged to be spaced apart from each other in the pinhole array 305 to respectively correspond to the plurality of light source modules 313. The pattern of the plurality of light source modules 313 may be the same as a pattern of the plurality of pinholes 315. In FIG. 7, the predetermined spacing is illustrated as being 1mm, but this is merely an example, and the present disclosure is not limited thereto. Each light source module 313 may be formed of the element for the single pixel, or may be formed of the element for the cluster of the hundreds to thousands of pixels.

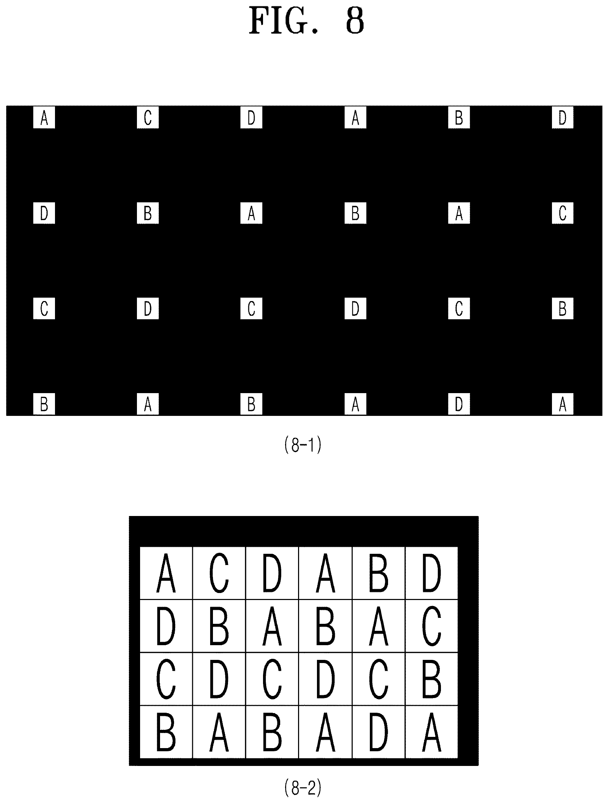

Hereinafter, the divided images output to the light source module array 303 (i.e., the respective light source modules 313) and the full image as they are viewed by the user through the pinhole array 305 will be described with reference to FIG. 8. FIG. 8 illustrates the divided images output from the light source module array and the full image as they are viewed by the user through the pinhole array according to an embodiment of the present disclosure.

As shown in (8-1) in FIG. 8, each of the divided images may be output through each light source module 313 of the light source module array 303 corresponding thereto.

In this case, each divided image output by each light source module 313 may be irradiated to the user's pupil through the corresponding pinhole 315 of the pinhole array 305. The divided images that have passed through the pinholes 315 may be viewed by the user as the full image as shown in (8-2) in FIG. 8.

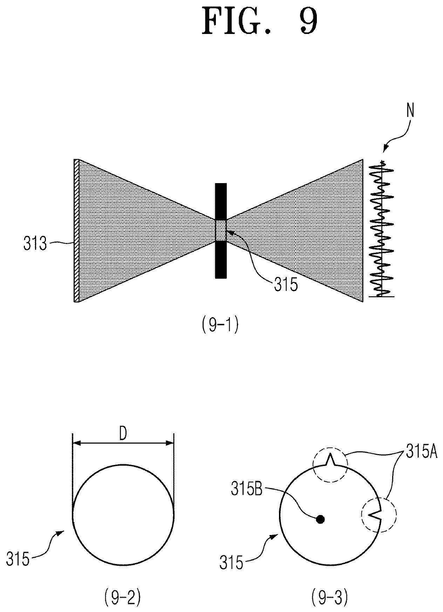

However, noise may be generated in the divided images that have passed through the pinhole array 305 and is viewed by the user depending on characteristics of the pinhole array 305, which will be described further with reference to FIG. 9. FIG. 9 illustrates a pinhole array of an electronic device according to an embodiment of the present disclosure.

As shown in (9-1) in FIG. 9, when the divided image output from each light source module 313 passes through the pinhole 315, noise N may be generated depending on the characteristics of the pinhole array 305.

The planar shape (e.g., the circular shape or the like) of the pinhole 315 needs to be geometrically perfect, as shown in (9-2) in FIG. 9. An aperture of the pinhole 315 is indicated by D.

However, when the pinhole array 305 is actually manufactured, the planar shape of the pinhole 315 may not be geometrically perfect, as shown in (9-3) in FIG. 9. That is, an edge of the pinhole 315 may have a fine irregularity 315A, and the noise N may be caused due to diffraction resulted therefrom. In addition, an unintended impurity 315B may be present in an opening of the pinhole 315, and the noise N may be caused due to diffraction resulted therefrom. Although not shown, the light blocking layer located out of the opening of the pinhole 315 may not be perfect for the light blocking, and may unintentionally transmit a portion of light therethrough, thereby causing the noise N.

The DOF of light passing through the pinhole 315 increases in inverse proportion to the aperture D of the pinhole 315. However, the noise N becomes clearer and more pronounced as the aperture D of the pinhole 315 becomes smaller. However, when the aperture D of the pinhole 315 increases, the noise N is reduced, but the DOF decreases, thereby reducing the effect of the pinhole 310.

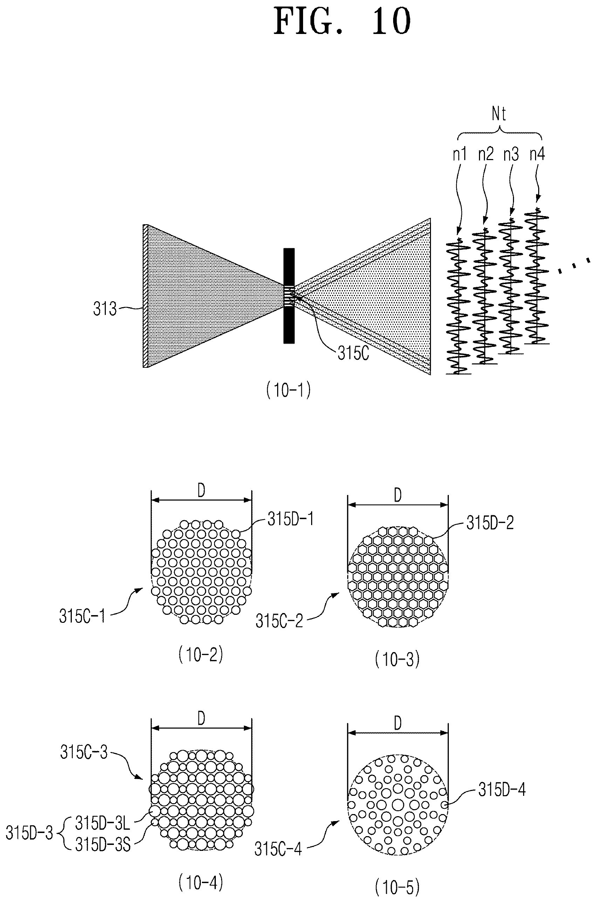

Hereinafter, a pinhole array capable of reducing the noise will be described with reference to FIG. 10. FIG. 10 illustrates a pinhole array of an electronic device according to an embodiment of the present disclosure. Hereinafter, for ease of description, each pinhole 315 according to FIG. 9 will be referred to as a single pinhole.

As shown in (10-1) in FIG. 10, a micro cluster pinhole 315C may be defined instead of each single pinhole 315 of the pinhole array 305. That is, in the pinhole array 305, a plurality of micro cluster pinholes 315C may be defined instead of the plurality of single pinholes 315. Each micro cluster pinhole 315C may be equipped as a cluster of a plurality of micro pinholes.

When an aperture D of the micro cluster pinhole 315C, 315C-1, and 315C-2 is equal to the aperture D of the single pinhole 315, the DOF expansion effect may be the same. However, noise n1, n2, n3, n4, . . . generated in the respective micro pinholes may overlap with one another and cause destructive interference, so that total noise Nt may be lower than noise in the case of the single pinhole 315.

Examples of the planar shape of the micro cluster pinhole 315C are as shown in (10-2) to (10-5) in FIG. 10. (10-2) to (10-5) in FIG. 10 show the exemplary planar shapes of the respective micro cluster pinholes 315C.

As shown in (10-2) to (10-4) in FIG. 10, each group of a plurality of micro pinholes 315D-1, 315D-2, and 315D-3 respectively constituting corresponding micro cluster pinholes 315C-1, 315C-2, and 315C-3 may be uniformly distributed. However, each group of the plurality of micro pinholes 315D-1, 315D-2, and 315D-3 respectively constituting the corresponding micro cluster pinholes 315C-1, 315C-2, and 315-C3 need not be uniformly distributed. Each of the micro cluster pinholes 315C, 315C-1, and 315C-2 may be constructed such that the micro pinholes are most concentrated at a center thereof and the micro pinholes become less concentrated toward a periphery thereof.

Sizes of the respective micro pinholes do not necessarily have to be the same. The sizes of the respective micro pinholes may be different from each other.

One example of the case in which the sizes of the respective micro pinholes are different from each other is illustrated in (10-4) in FIG. 10. Each micro cluster pinhole 315-C3 may have a structure in which small micro pinholes 315D-3S are disposed between large micro pinholes 315D-3L. The large micro pinholes 315D-3L generate noise in a low frequency band, while the small micro pinholes 315D-3S generate noise in a high frequency band. The large micro pinholes 315D-3L and the small micro pinholes 315D-3S disposed as described above may allow even fine noise to overlap with one another, thereby increasing the noise reduction effect.

Another example in which the sizes of the respective micro pinholes are different from each other is shown in (10-5) in FIG. 10. Each micro cluster pinhole 315C-4 may be constructed such that the sizes of the micro pinholes are great at a center thereof and the sizes of the micro pinholes decrease toward a periphery thereof. For example, a spacing between the micro pinholes may be small (or large) at the center of each micro cluster pinhole 315C-4, and the spacing between the micro pinholes may increase (or decrease) toward the periphery thereof.

The micro cluster pinhole 315C-4 as such may allow noise in various frequency bands to overlap with one another, and may allow high-frequency noise generated from the micro pinhole with the small size to overlap with one another more, thereby increasing the noise reduction effect.

The plurality of micro pinholes may be distributed based on a pattern such as a grid, a diamond, and a zigzag. Alternatively, the plurality of micro pinholes may be irregularly distributed.

A planar shape of the micro pinhole may be variously implemented. For example, as shown in (10-2), (10-4), and (10-5) in FIG. 10, the planar shape of each of the micro pinholes 315D-1, 315D-1, 315D-3, and 315D-4 (i.e., a planar shape of an opening) may be circular. Alternatively, as shown in (10-3) in FIG. 10, the planar shape of each micro pinhole 315D-2 (i.e., the planar shape of the opening) may be hexagonal. It will be appreciated that shapes (e.g., a polygonal shape such as square and pentagonal shapes) other than the circular and hexagonal shapes are also available.

When the planar shape of each of the micro pinholes 315D-1, 315D-3, and 315D-4 is circular, a spacing between each group of the plurality of micro pinholes 315D-1, 315D-3, and 315D-4 may not be uniform, resulting in non-uniform noise overlap therebetween.

However, there is an advantage in that when the planar shape of each micro pinhole 315D-2 is hexagonal, a spacing between the plurality of micro pinholes 315D-2 may be uniform, resulting in uniform noise overlap.

The aperture D of each micro cluster pinhole may be in a range of 100µm to 1500µm. Further, a separation distance between micro cluster pinholes adjacent to each other may be in a range of 200µm to 3000µm, and the range may vary in proportion to the aperture D of each micro cluster pinhole.

In experiments, the noise overlap effect was found to be favorable when a ratio between the aperture D of each micro cluster pinhole and the separation distance between the micro cluster pinholes adjacent to each other was in a range of 1:1.8 to 1:2.2, and the noise overlap effect was observed to be the highest when the ratio was 1:2.

In addition, the aperture of each micro pinhole may be in a range of 5µm to 100µm, and may vary in proportion to the aperture D of each micro cluster pinhole. The separation distance between the micro pinholes adjacent to each other may be in a range of 5µm to 2000µm, and the range may vary in proportion to the aperture of each micro pinhole.

In experiments, the noise overlap effect was found to be favorable when a ratio between the aperture of each micro pinhole and the separation distance between the micro pinholes adjacent to each other was in a range of 1:1 to 1:20.

In one micro cluster pinhole, at least one of the aperture of each micro pinhole and the separation distance between the micro pinholes adjacent to each other does not necessarily have to be entirely uniform. In one micro cluster pinhole, at least one of the aperture of each micro pinhole and the separation distance between the micro pinholes adjacent to each other may be non-uniform within a range in which the ratio is satisfied. In addition, in one micro cluster pinhole, a depth of each micro pinhole (i.e., a length of a light transmitting medium in the micro pinhole) may be non-uniform. In this case, the noise overlap effect may be more excellent. In addition, the plurality of micro pinholes in one micro cluster pinhole do not necessarily have the same planar shape, and may be formed in a combination of various shapes. In addition, the plurality of micro pinholes in one micro cluster pinhole may not necessarily have uniform transmittance, and may be formed with a combination of various transmittances.

In addition, the micro cluster pinhole does not have to be composed of only one layer. The micro cluster pinhole may be constructed in such a manner that two or more layers each having a plurality of micro pinholes are stacked such that micro pinholes in the respective layers at least partially overlap each other or are at least partially covered by each other. At least one of a shape, a size, and a separation spacing of the micro pinholes in each layer may be different from those in another layer. For example, when two layers are stacked to constitute the micro cluster pinhole, a micro pinhole of one layer may be circular, and a micro pinhole of the other layer may be hexagonal. Similarly, the size and the separation spacing may also be different for each layer.

At least one of the size and the shape of the micro pinhole may actively change. For example, the micro pinhole may be formed of an electronic ink having a high resolution, and may be constructed such that at least one of the size and the shape thereof actively changes in response to a control signal applied to the electronic ink from the optical driver 200. Accordingly, at least one of the size and the shape of the micro pinhole may be adjusted based on the wavelength of the light source such that the noise is minimized.

The above detailed description should not be construed in all respects restrictively but should be considered illustrative. The scope of the present disclosure should be determined by reasonable interpretation of the appended claims, and all changes within the equivalent scope of the present disclosure are included in the scope of the present disclosure.

## Claims

1. An electronic device comprising:
a transparent substrate;
a light source module array disposed on a first surface of the transparent substrate and having a plurality of light source modules arranged in a lattice structure;
a pinhole array disposed on a second surface of the transparent substrate and having a plurality of micro cluster pinholes defined therein and arranged to correspond to the plurality of light source modules, respectively; and
an optical driver configured to control the light source module array,
wherein light beams based on an image generated by the optical driver are irradiated from the light source module array and provided to a user through the pinhole array.

2. The electronic device of claim 1, wherein each micro cluster pinhole comprises a plurality of micro pinholes.

3. The electronic device of claim 2, wherein each micro pinhole has a hexagonal opening, and the plurality of micro pinholes are arranged such that a separation distance between micro pinholes adjacent to each other is uniform.

4. The electronic device of claim 2, wherein a ratio between an aperture of each micro pinhole to the separation distance between the micro pinholes adjacent to each other is in a range of 1:1 to 1:20.

5. The electronic device of claim 4, wherein the aperture of the micro pinhole is in a range of 5µm to 100µm, and the separation distance between the micro pinholes adjacent to each other is in a range of 5µm to 2000µm.

6. The electronic device of claim 5, wherein a separation distance between micro cluster pinholes adjacent to each other is in a range of 1:1.8 to 1:2.2.

7. The electronic device of claim 6, wherein an aperture of each micro cluster pinhole is in a range of 100µm to 1500µm, and the separation distance between the micro cluster pinholes adjacent to each other is in a range of 200µm to 3000µm.

8. The electronic device of claim 7, wherein the separation distance between the micro pinholes adjacent to each other increases from a center of each micro cluster pinhole toward a periphery thereof.

9. The electronic device of claim 1, wherein each micro cluster pinhole is defined in a manner such that at least two layers are stacked.

10. The electronic device of claim 9, wherein a plurality of micro pinholes are defined in each layer; and the at least two layers stacked such that the micro pinholes in the respective layers at least partially overlap each other or are at least partially covered by each other.

11. The electronic device of claim 10, wherein at least one of a shape, a size, and a separation spacing of the micro pinholes in one layer is different from at least one of a shape, a size, and a separation spacing of the micro pinholes in another layer.

12. The electronic device of claim 1, wherein each light source module is composed of a cluster of light source elements.

13. The electronic device of claim 12, wherein each light source element comprises a liquid crystal on silicon (LCoS) element, a liquid crystal display (LCD) element, an organic light emitting diode (OLED) element, a digital micromirror device (DMD) element, a micro light emitting diode (LED) element, and a quantum dot (QD) LED element.

14. The electronic device of claim 1, wherein the electronic device is a wearable display,
wherein the transparent substrate is disposed such that the first surface thereof faces an outside and the second surface thereof faces a user when the wearable display is worn.

15. The electronic device of claim 14, wherein the wearable display comprises a front frame and a side frame,
wherein the transparent substrate is disposed on the front frame, and the optical driver is disposed on the side frame.

16. The electronic device of claim 15, wherein the transparent substrate is flat or has a predetermined curvature.

17. The electronic device of claim 1, further comprising an image division circuit configured to divide the image generated by the optical driver and transmit the divided images to the respective light source modules.

18. The electronic device of claim 1, wherein a scale of the lattice structure is determined based on at least one of a distance between the light source module array and a user's pupil, a pupil size, an optical wavelength band.
